# DEMANDE DE BREVET EUROPEEN

(11) **EP 1 275 459 A1**
(43) Date de publication de la demande: **15.01.2003**
(21) Numéro de dépôt: 02291660.5
(22) Date de dépôt: 03.07.2002
(51) Int. Cl.: B23B 51/04

(54) **Tête d'aspiration, couronne et rallonge pour forage à sec**

(30) Priorité: 12.07.2001 FR 0109276
(71) Demandeur: Toolmatic BVBA, 8600 Diksmuide (BE)
(72) Inventeur: Vanaudenaerde, Frank, 8020 Oostkamp (BE); Santin, Hervé, 59840 Perenchies (FR)
(74) Mandataire: David, Daniel

(57) **Abrégé**

L'élément de forage de l'invention est agencé pour, par une extrémité d'entraînement (3), être reçu sur une tête d'aspiration (11), reçue sur une perceuse, ou sur une rallonge intercalée entre l'élément (1) et la tête d'aspiration (11), l'extrémité d'entraînement (3) étant agencée pour servir de butée (8) à un écrou de serrage et de verrouillage (20) monté mobile en déplacement sur la tête d'aspiration (11) ou sur la rallonge et verrouiller ainsi la couronne (1). L'extrémité d'entraînement (3) comporte un anneau antirotation (63) pour s'opposer à ce que l'écrou (20) ne s'écarte de ladite extrémité d'entraînement (3).

L'invention s'applique bien aux matériaux de construction.

## Description

Le domaine de l'invention est celui du forage à sec dans des matériaux de construction, comme les briques, les ensembles plâtre-béton cellulaire, les moellons et les hourdis.

Pour cela, on utilise une couronne, ou foret, qui se présente généralement sous forme d'un tube, sur l'un des bords d'extrémité duquel on a rapporté par exemple par brasage des segments diamantés. L'entraînement en rotation de la couronne s'effectue au moyen d'une perceuse. Intercalée entre la couronne et la perceuse se trouve une tête d'aspiration des poussières provoquées par le forage autour de la carotte. Une tête d'aspiration comporte un axe d'entraînement, entraîné à un bout par la perceuse et entrainant à l'autre bout la couronne.

La coopération entre la tête d'aspiration et la perceuse s'effectue par l'intermédiaire d'un adaptateur à vis et tête d'écrou ou à double vis.

La coopération entre la tête d'aspiration et la couronne est une coopération du type à baïonnette, avec une clavette transversale sur une extrémité d'emmanchement de l'axe d'entraînement de la tête et les rainures de réception de la clavette sur une douille tubulaire ménagée à l'extrémité d'entraînement de la couronne.

Un filetage, ménagé à la surface de l'axe, reçoit un écrou de serrage et de verrouillage de la fixation à baïonnette, l'écrou étant vissé jusqu'à venir en butée contre le bord annulaire d'extrémité de la douille à baïonnette de la couronne.

L'axe d'entraînement de la tête d'aspiration est monté dans une cage à roulements à l'intérieur de laquelle débouche un conduit de sortie d'aspiration, généralement vissé dans la paroi de la cage. Naturellement, l'axe d'entraînement est percé de lumières de passage des poussières pour assurer la communication entre la sortie d'aspiration et l'intérieur de l'axe d'entraînement.

Dans le cas où la longueur axiale de la couronne n'est pas suffisante, on dispose une rallonge entre la couronne et la tête d'aspiration, qui comporte à un bout une extrémité d'emmanchement à clavette, comme la tête d'aspiration, et, à l'autre bout, une extrémité à douille à baïonnette, comme celle de la couronne, et qui comporte aussi, comme la tête d'aspiration, un écrou de serrrage et de verrouillage.

La demanderesse a constaté qu'au cours du fonctionnement de l'ensemble couronne-tête d'aspiration, avec ou sans rallonge, l'écrou de serrage et de verrouillage, de la tête d'aspiration ou de la rallonge, avait tendance à se dévisser et donc à ne plus assurer le verrouillage de la couronne.

La présente invention vise à éviter cet inconvénient.

A cet effet, l'invention concerne tout d'abord une tête d'aspiration agencée pour, en tant qu'élément de forage, être montée sur une perceuse et recevoir l'extrémité d'entraînement d'une couronne de forage ou d'une rallonge intercalée entre la tête d'aspiration et la couronne, un écrou de serrage et de verrouillage étant monté sur la tête pour y être déplacé en butée contre ladite extrémité d'entraînement et verrouiller ainsi la couronne, caractérisée par le fait que l'écrou de serrage et de verrouillage comporte des moyens antirotation pour s'opposer à ce qu'il ne s'écarte de ladite extrémité d'entraînement.

On notera d'emblée que la demanderesse n'exclut pas, au-delà d'un montage à baïonnette, que la solidarisation deux à deux de la tête d'aspiration, de la couronne et de la rallonge puisse s'effectuer aussi par vissage.

Naturellement, les moyens antirotation peuvent tout aussi bien être prévus sur l'extrémité d'entraînement de la couronne et de la rallonge ainsi que sur l'écrou de serrage et de verrouillage de la rallonge.

Ainsi, l'invention concerne aussi une couronne de forage agencée pour, en tant qu'élément de forage, par une extrémité d'entraînement, être reçue sur une tête d'aspiration, reçue sur une perceuse, ou sur une rallonge intercalée entre la couronne et la tête d'aspiration, l'extrémité d'entraînement étant agencée pour servir de butée à un écrou de serrage et de verrouillage monté mobile en déplacement sur la tête d'aspiration ou sur la rallonge et verrouiller ainsi la couronne, caractérisée par le fait que l'extrémité d'entraînement comporte des moyens antirotation pour s'opposer à ce que l'écrou ne s'écarte de ladite extrémité d'entraînement de la couronne.

L'invention concerne encore une rallonge agencée pour, en tant qu'élément de forage, être montée, par une extrémité d'entraînement menée, sur une tête d'aspiration montée sur une perceuse et pour recevoir, par une extrémité d'entraînement opposée menante, l'extrémité d'entraînement d'une couronne de forage, un écrou de serrage et de verrouillage étant monté pour être déplacé en butée contre l'extrémité d'entraînement de la couronne et ainsi la verrouiller et l'extrémité d'entraînement menée étant agencée pour servir de butée à un écrou de serrage et de verrouillage monté mobile en déplacement sur la tête d'aspiration et verrouiller ainsi la rallonge, caractérisée par le fait qu'au moins l'une ou l'autre des deux pièces d'écrou de serrage et d'extrémité menée comporte des moyens antirotation pour s'opposer à ce que la rallonge ne s'écarte de la couronne ou de la tête d'aspiration.

De préférence, les moyens antirotation comprennent des moyens de frottement transversaux, c'est-à-dire s'étendant sensiblement dans un plan perpendiculaire à l'axe de la couronne, par exemple une surface annulaire transversale moletée ou, mieux encore, il est prévu, dans une gorge annulaire frontale, un anneau torique en un matériau à coefficient de frottement relativement élevé du type caoutchouc. Il pourrait être aussi envisagé, comme moyen antirotration, une surface rehaussée d'une pluralité de pions ou de billes à coefficient de frottement élevé, voire même une rondelle de type Belleville.

L'invention sera mieux comprise à l'aide de la description suivante des formes de réalisation préférées des éléments de l'invention, en référence au dessin annexé, sur lequel
- la figure 1 est une vue en perspective de la couronne de forage ;
- la figure 2 est une vue en perspective de la tête d'aspiration ;
- la figure 3 est une vue en perspective d'un adaptateur à double vis ;
- la figure 4 est une vue en perspective d'un adaptateur à vis et tête d'écrou ;
- la figure 5 est une vue en perspective d'une rallonge et
- la figure 6 est une vue en coupe axiale de l'assemblage de la couronne et de la tête d'aspiration, sur la demi-vue gauche, l'écrou étant hors de position de verrouillage, et, sur la demi-vue droite, l'écrou étant en position de verrouillage, en butée contre la couronne.

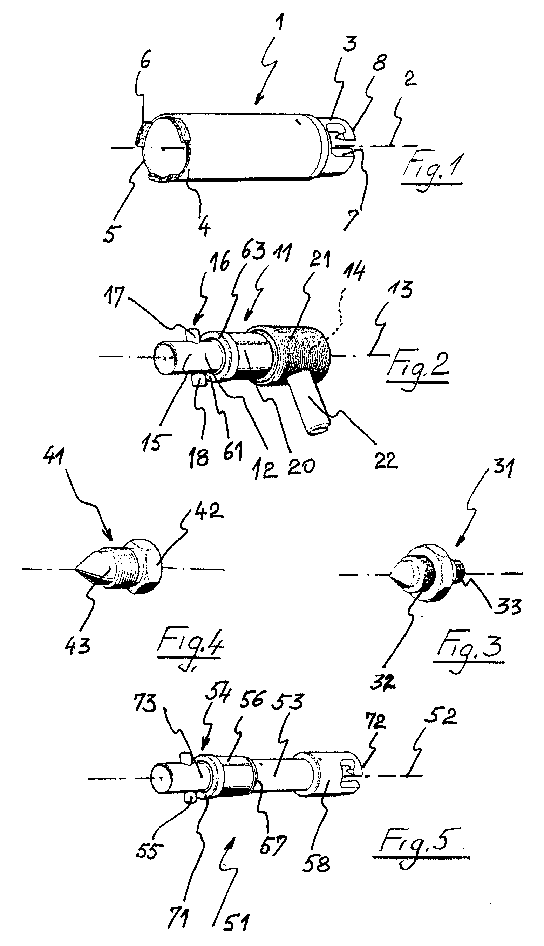

La couronne de forage 1 de la figure 1 est un tube, d'axe 2, comportant une extrémité d'entraînement 3 et une extrémité de forage 4. Sur le bord 5 de l'extrémité de forage 4 ont été rapportés ici par brasage trois segments diamantés 6.

L'extrémité d'entraînement 3 de la couronne est ici une douille à baïonnette avec ses rainures 7 de réception d'une clavette d'entraînement d'une tête d'aspiration ou d'une rallonge, comme on le verra ci-après. La douille d'entraînement 3 de la couronne 1 comporte un bord libre annulaire 8.

La douille d'entraînement à baïonnette 3 est agencée pour être reçue sur une tête d'aspiration (figure 2) ou sur une rallonge (figure 5) et servir de butée à un écrou de serrage et de verrouillage.

La tête d'aspiration 11, de la figure 2, comporte un mandrin d'entraînement 12, d'axe 13, entraîné à une extrémité 14 par une perceuse, par l'intermédiaire d'un adaptateur, et entraînant, à l'autre extrémité 15, la couronne 1, par l'intermédiaire de la douille d'entraînement 3 de la couronne emmanchée sur le bout d'entraînement 15 du mandrin 12, ou une rallonge.

Dans le métier, on ne parle pas du mandrin mais de l'axe d'entraînement.

L'extrémité d'entraînement, ou d'emmanchement, 15 de la tête porte, chassée transversalement et à force, une clavette 16 de verrouillage avec deux extrémités 17, 18 en saillie pour faire fonction d'ergots de verrouillage après réception dans les rainures 7 de la douille 3 de la couronne.

Un filetage 19 est ménagé à la surface du mandrin 12 qui reçoit, vissé sur ce filetage, un écrou de serrage et de verrouillage 20.

Le mandin 12 est monté dans une cage à roulements 21 à l'intérieur de laquelle débouche un conduit de sortie d'aspiration 22.

Par des lumières ménagées dans le mandrin, celui-ci communique avec le conduit de sortie d'aspiration 22.

L'adaptateur 31 de la figure 3 est un adaptateur à double vis, une première 32, qui se visse dans l'extrémité 14 du mandrin 12 de la tête d'aspiration 11, et une deuxième 33, qui se visse dans la perceuse. Quant à l'adaptateur 41 de la figure 4, à la différence de celui de la figure 3, il s'adapte à la perceuse par une tête d'écrou 42, en fait la tête de la vis 43 d'adaptation à la tête d'aspiration.

La rallonge 51, de la figure 5, est constituée d'un tube 53, d'axe 52, avec, à une extrémité d'entraînement menée, une douille à baïonnette 58, comme la douille 3 de la couronne 1, et, à une extrémité d'entraînement opposée menante, d'un ensemble 54 identique à celui de la tête d'aspiration 11 et comprenant une clavette de verrouillage 55 et un écrou de serrage et de verrouillage 56 vissé sur un filetage 57 du tube 53. La douille 58 est destinée à être emmanchée sur la tête d'aspiration et l'ensemble menant 54 a être emmanché dans la douille 3 de la couronne de forage 1.

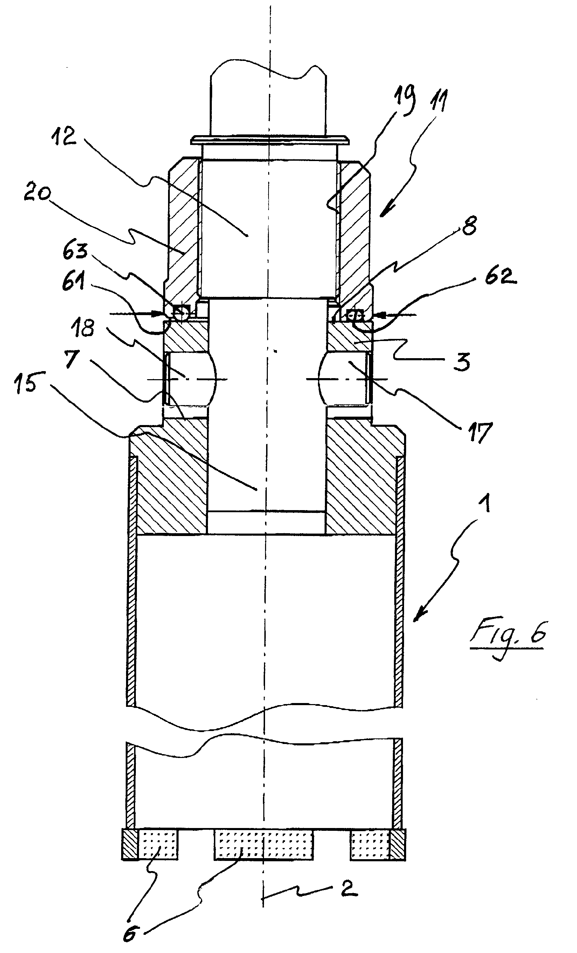

Dans l'exemple considéré, l'écrou 20, vissé sur le mandrin 12 de la tête d'aspiration 11, comporte, débouchant à la surface annulaire transversale frontale 61 tournée vers la couronne de forage 1, quand celle-ci est emmanchée sur le mandrin 12 (figure 6), une gorge annulaire frontale 62 recevant un anneau torique 63 ici en caoutchouc.

Quand la couronne 1 a été emmanchée sur le mandrin 12 de la tête d'aspiration 11 et que la clavette 16 a été engagée dans le fond des rainures 7 de la douille à baïonnette 3 de la couronne 1, on visse l'écrou 20 sur le mandrin 12 jusqu'à ce que la surface frontale 61 vienne en butée contre le bord annulaire 8 de la douille 3 pour serrer et verrouiller la couronne contre la tête d'aspiration. La mise en butée écrase l'anneau torique 63 (partie droite de la figure 6) qui peut alors assurer par frottement une fonction antirotation évitant à l'écrou 20 de se dévisser et de s'écarter de la couronne.

Naturellement, on pourrait prévoir la gorge, avec son anneau torique antirotation, non pas dans la surface frontale de l'écrou, mais dans le bord annulaire frontal 8 de la douille à baïonnette d'entraînement de la couronne.

De même, et en considérant la rallonge 54, la gorge et son anneau antirotation pourraient aussi être prévus soit sur la surface frontale 71 de l'écrou de serrage et de verrouillage 56, vissé à l'extrémité d'entraînement menante 73 du tube 53, soit sur le bord annulaire frontal 72 de la douille à baïonnette 58 constituant l'extrémité menée de la rallonge 51, soit sur les deux.

En variante, la surface annulaire transversale 61 pourrait être moletée.

## Revendications

1. Tête d'aspiration (11) agencée pour, en tant qu'élément de forage, être montée sur une perceuse et recevoir l'extrémité d'entraînement (3) d'une couronne de forage (1) ou d'une rallonge (51) intercalée entre la tête d'aspiration (11) et la couronne (1), un écrou de serrage et de verrouillage (20) étant monté sur la tête pour y être déplacé en butée contre ladite extrémité d'entraînement (3) et verrouiller ainsi la couronne (1), **caractérisée par le fait que** l'écrou de serrage et de verrouillage (20) comporte des moyens antirotation (63) pour s'opposer à ce qu'il ne s'écarte de ladite extrémité d'entraînement (3).

2. Couronne de forage (1) agencée pour, en tant qu'élément de forage, par une extrémité d'entraînement (3), être reçue sur une tête d'aspiration (11), reçue sur une perceuse, ou sur une rallonge (51) intercalée entre la couronne (1) et la tête d'aspiration (11), l'extrémité d'entraînement (3 ; 58) étant agencée pour servir de butée (8) à un écrou de serrage et de verrouillage (20 ; 56) monté mobile en déplacement sur la tête d'aspiration (11) ou sur la rallonge (51) et verrouiller ainsi la couronne (1), **caractérisée par le fait que** l'extrémité d'entraînement (3 ; 58) comporte des moyens antirotation (63) pour s'opposer à ce que l'écrou (20 ; 56) ne s'écarte de ladite extrémité d'entraînement (3) de la couronne (1).

3. Rallonge (51) agencée pour, en tant qu'élément de forage, être montée, par une extrémité d'entraînement menée (58), sur une tête d'aspiration (11) montée sur une perceuse et pour recevoir, par une extrémité d'entraînement opposée menante (73), l'extrémité d'entraînement (3) d'une couronne de forage (1), un écrou de serrage et de verrouillage (56) étant monté pour être déplacé en butée (8) contre l'extrémité d'entraînement (3) de la couronne (1) et ainsi la verrouiller et l'extrémité d'entraînement menée (58) étant agencée pour servir de butée à un écrou de serrage et de verrouillage (20) monté mobile en déplacement sur la tête d'aspiration (11) et verrouiller ainsi la rallonge (51), **caractérisée par le fait qu'**au moins l'une ou l'autre des deux pièces d'écrou de serrage (56) et d'extrémité menée (58) comporte des moyens antirotation (63) pour s'opposer à ce que la rallonge (51) ne s'écarte de la couronne (1) ou de la tête d'aspiration (11).

4. Elément de forage selon l'une des revendications 1 à 3, dans lequel les moyens antirotation comprennent des moyens de frottement transversaux (63).

5. Elément de forage selon la revendication 4, dans lequel les moyens antirotation comprennent, dans une gorge annulaire frontale (62), un anneau torique (63) en un matériau à coefficient de frottement relativement élevé.

6. Elément de forage selon la revendication 5, dans lequel l'anneau torique (63) est en caoutchouc.

7. Elément de forage selon la revendication 4, dans lequel les moyens antirotation comprennent une surface annulaire transversale moletée.

8. Elément de forage selon la revendication 4, dans lequel les moyens antirotation comprennent une surface rehaussée d'une pluralité de pions ou de billes à coefficient de frottement élevé.
